# EUROPÄISCHE PATENTSCHRIFT

(11) **EP 1 354 758 B1**
(45) Veröffentlichungstag und Bekanntmachung des Hinweises auf die Patenterteilung: **05.11.2008**
(21) Anmeldenummer: 03002859.1
(22) Anmeldetag: 08.02.2003
(51) Int. Cl.: B60N 3/14

(54) **Bedieneinrichtung für ein Element und Verwendung der Bedieneinrichtung**
Control device for an element and use of that control device
Dispositif de commande pour élément et utilisation de ce dispositif

(30) Priorität: 15.02.2002 DE 10206163
(43) Veröffentlichungstag der Anmeldung: 22.10.2003
(73) Patentinhaber: ADAM OPEL AG, 65423 Rüsselsheim (DE)
(72) Erfinder: Ranker, Norbert, Dipl.-Ing., 65428 Rüsselsheim (DE)

(56) Entgegenhaltungen:
- EP-A- 1 120 314
- US-A- 4 720 131
- US-A- 5 697 593
- US-A1- 2001 028 207
- PATENT ABSTRACTS OF JAPAN vol. 014, no. 181 (M-0961), 11. April 1990 (1990-04-11) -& JP 02 031954 A (NIFCO INC), 1. Februar 1990 (1990-02-01)

## Beschreibung

Die Erfindung betrifft eine Bedieneinrichtung für ein Element im Greifbereich eines Fahrers eines Kraftfahrzeuges mit einer Aufnahme für das Element und mit einer Führungseinrichtung zur Führung des Elementes von einer zurückgezogenen Position in eine hervorstehende, zur Bedienung des Elements vorgesehene Position, wobei die Aufnahme ein schwenkbar gelagertes Stellelement hat, wobei zwischen dem Element und dem Stellelement Koppelmittel zur Übertragung der Schwenkbewegung des Stellelementes auf Längsbewegungen des Elementes in der Führungseinrichtung angeordnet sind und wobei die Koppelmittel einen mit dem Stellelement verbundenen Hebel aufweisen.

Eine derartige Bedieneinrichtung ist in der US-PS 4,720, 131. Das zu bedienende Element ist ein linear in einer Führung verfahrbarer Aschenbecher. Das Stellelement ist eine Klappe, an der ein Hebel angeformt ist, der mit seinem freien Ende in eine Kulisse an der Seitenwand des Aschenbechers eingreift. Durch Ausüben eines Druckes auf die Front des Aschenbechers kann dieser zurückgeschoben werden, wobei sich die Klappe schließt.

Gemäß der JP 02-31954 ist dieses Konzept dahingehend geändert, dass der Hebel um eine Querachse schwenkbar mit dem Stellelement verbunden ist. Der Zapfen ist in einer weiteren Kulisse geführt, die an einem Ende abgeknickt ist, so dass der Aschenbecher in der ausgefahrenen Position zwar arretiert ist, aber gleichzeitig auch ein Schließen der Klappe erschwert ist.

Solche Bedieneinrichtungen sind bei heutigen Kraftfahrzeugen zur verdeckten Montage des Elements aus der Praxis bekannt. Beispielsweise offenbart die US-PS 4,720,131 einen linear in einer Führung verfahrbaren Aschenbecher. Das Stellelement ist eine die Aufnahme für den Aschenbecher verschließende Klappe, an der ein Hebel angeformt ist, der mit einem Zapfen an seinem freien Ende in eine Kulisse an der Seitenwand des Aschenbechers eingreift. Durch Ausüben eines Druckes auf die Front des Aschenbechers kann dieser zurückgeschoben werden, wobei sich die Klappe schließt.

Ein ähnlich aufgebautes Koppelmittel, bei dem die Schwenkbewegung der Klappe unmittelbar auf ein linear verfahrbares Element übertragen wird, ist in der EP 1 120 314 A2 beschrieben.

Die US 2001/0028207 offenbart einen Mechanismus, bei dem mit Öffnen eines Deckels ein Rahmen zum Umgreifen einer Getränkedose und zum Halten der Getränkedose auf einer Stellfläche gegenüber dieser angehoben wird. Auch hierbei kann durch Niederdrücken des Rahmens der Deckel geschlossen werden, d. h. der Rahmen wird nicht in angehobener Lage arretiert.

Die US 2001/0028207 offenbart einen Getränkedosenhalter mit zwei von einer Stellfläche aufsteigenden Armen, die bei Nichtgebrauch in einer Aufnahme unterhalb der Stellfläche untergebracht sind. Der eine Arm dient dabei als Deckel für die Aufnahme und wird bei Ingebrauchnahme durch die Kraft einer Feder hochgeklappt, wobei der andere mit ihm gekoppelte Arm linear aus der Aufnahme ausgefahren wird. Eine Arretierung der Arme in ihre aufgestellte Position erfolgt durch die Federkraft.

Der Erfindung liegt das Problem zugrunde, eine Bedieneinrichtung der eingangs genannten Art so zu gestalten, dass sie besonders platzsparend aufgebaut und kostengünstig herstellbar ist. Weiterhin soll erreicht werden, dass das Element in der hervorstehenden, zur Bedienung des Elements vorgesehenen Position arretiert ist und nicht durch die unmittelbare auf das Element ausgeübte Kraft zurückgeschoben werden kann. Die Arretierung soll aber die Betätigung des Stellelementes nicht erschweren.

Das Problem wird erfindungsgemäß dadurch gelöst, dass der Hebel über ein gelenkig mit dem Hebel verbundenes Zwischenglied mit einer Wippe gelenkig verbunden ist, wobei das Zwischenglied in der hervorstehenden Position des Elements eine Gerade bzw. annähernd eine Gerade mit dem Hebel bildet.

Durch diese Gestaltung ist die Bewegung des Elementes in der hervorstehenden Position blockiert und kann nur durch die Bewegung des Stellelementes wieder in die zurückgezogene Position bewegt werden. Hierdurch vermag das Element Kräfte abzustützen.

Das Element lässt sich gemäß einer vorteilhaften Weiterbildung der Erfindung vollständig verdeckt anordnen, wenn das Stellelement als das Element in der zurückgezogenen Position abdeckenden Klappe ausgebildet ist. Durch diese Gestaltung lässt sich das Element in der zurückgezogenen Position vollständig von der Klappe verdecken. Vorzugsweise ist die Klappe zur Bewegung des Elementes schwenkbar gelagert.

Das Element könnte beispielsweise einen in einem Langloch eines mit dem Stellelement verbundenen Hebels geführten Zapfen haben. Eine vorgesehene Übersetzung der Bewegung des Stellelementes auf die Bewegung des Elementes lässt sich gemäß einer anderen vorteilhaften Weiterbildung der Erfindung einfach einstellen, wenn die Koppelmittel miteinander gelenkig verbundene Hebel aufweisen.

Bei der vorgesehenen Längsbewegung des Elements mit schwenkbaren Hebeln der Koppelmittel könnten einige der Hebel als Schiebehülsen ausgebildet sein. Die erfindungsgemäße Bedieneinrichtung gestaltet sich jedoch konstruktiv besonders einfach und lässt sich einfach montieren, wenn die Koppelmittel eine Kulissenführung aufweisen.

Das Element kann gemäß einer anderen vorteilhaften Weiterbildung der Erfindung in der hervorstehenden Position von der Aufnahme entfernt werden, wenn das Element mit einer in der Führungseinrichtung verschieblichen Führungshülse verbunden ist.

Beim Greifen des in der hervorstehenden Position befindlichen Elementes störende Hebel lassen sich gemäß einer anderen vorteilhaften Weiterbildung der Erfindung einfach vermeiden, wenn die Koppelmittel vollständig unterhalb einer an die Aufnahme angrenzenden Wandung angeordnet sind.

Vorzugsweise wird die Bedieneinrichtung für eine verdeckte Anordnung eines Zigarettenanzünders im Greifbereich des Fahrers des Kraftfahrzeuges genutzt.

Hierdurch kann die in der Führungseinrichtung verschiebliche Führungshülse mit einer Stromquelle verbunden sein und das Element mit einer aufheizbaren Spirale aufnehmen. Das Element kann daher in der hervorstehenden Position einfach von der Führungshülse entfernt und anschließend wieder in diese zurückgesteckt werden. Da die Koppelmittel in der hervorstehenden Position eine Bewegung durch das Element blockieren, wird die Führungshülse beim Herausziehen und Zurückstecken des Elements nicht bewegt. Die Führungshülse wird daher dank der Erfindung zuverlässig in der hervorstehenden Position abgestützt.
- Fig. 1: schematisch eine erfindungsgemäße Bedieneinrichtung in einer zurückgezogenen Position eines Elementes,
- Fig.2: die Bedieneinrichtung aus Figur 1 in einer hervorstehenden Position des Elementes.

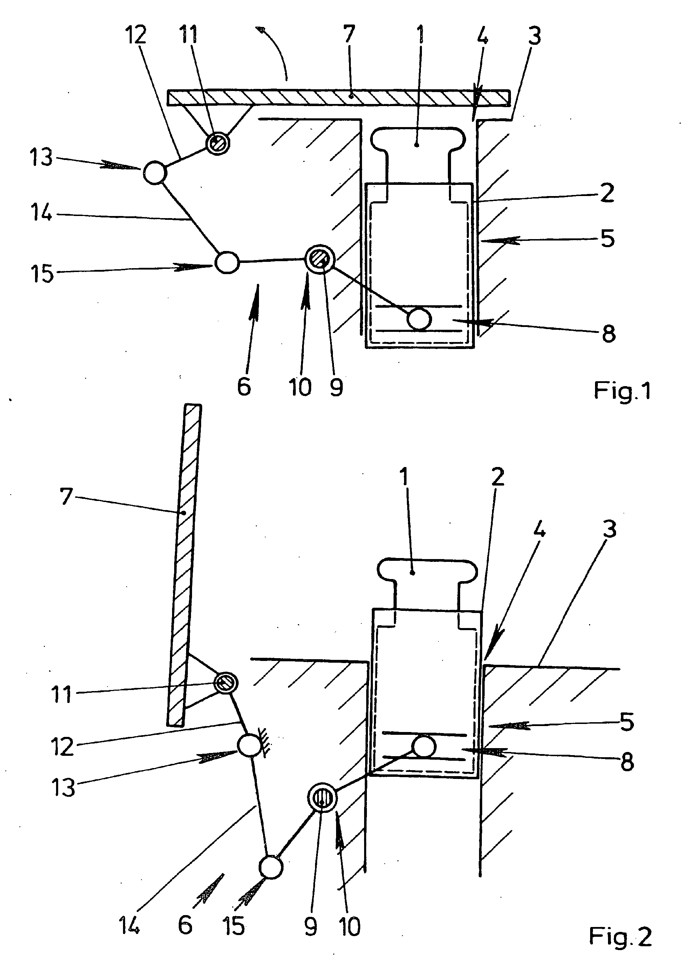

Figur 1 zeigt schematisch eine Bedieneinrichtung mit einem als Zigarettenanzünder ausgebildeten Element 1. Das Element 1 ist lösbar in einer Führungshülse 2 angeordnet und befindet sich in einer hinter einer Wandung 3, beispielsweise einer Armaturentafel, zurückgezogenen Position. Die Wandung 3 hat eine Aufnahme 4 für das Element 1 und die Führungshülse 2. Die Führungshülse 2 ist in einer Führungseinrichtung 5 längsverschieblich geführt und über Koppelmittel 6 mit einem Stellelement 7 verbunden. Die Führungshülse 2 hat hierfür eine Kulissenführung 8, in die eine an einer feststehenden Achse 9 gelagerte Wippe 10 eingreift. Das Stellelement 7 ist als das Element 1 verdeckende Klappe ausgebildet und um eine feststehende Achse 11 schwenkbar gelagert. Ein mit dem Stellelement 7 verbundener Hebel 12 ist über ein Gelenk 13 mit einem Zwischenglied 14 verbunden. Das Zwischenglied 14 ist ebenfalls über ein Gelenk 15 mit der Wippe 10 verbunden.

Beim Verschwenken des Stellelementes 7 um seine feststehende Achse von der Aufnahme 4 des Elementes 1 weg wird der Hebel 12 ausgelenkt und verschiebt dabei das Zwischenglied 14. Dieses verstellt die Wippe 10, welche über die Kulissenführung 8 die Führungshülse 2 und damit das Element 1 verschiebt.

Wenn das Stellelement 7 vollständig von der Aufnahme 4 weggeschwenkt ist, befindet sich das als Zigarettenanzünder ausgebildete Element 1 in einer gegenüber der Wandung 3 hervorstehenden Position. Diese Stellung der Bedieneinrichtung ist in Figur 2 dargestellt. Figur 2 zeigt zudem, dass der Hebel 12 und das Zwischenglied 14 eine Gerade bzw. annähernd eine Gerade bilden. Hierdurch ist das Gelenk 13 gestreckt, so dass die Führungshülse 2 nicht mehr in die Aufnahme 4 zurückgedrückt werden kann. Das gilt insbesondere dann, wenn - wie gezeigt - der Hebel 12 und das Zwischenglied 14 einen flachen Winkel einschließen und an einem Anschlag anliegen. Damit kann das Element 1 aus der Führungshülse 2 herausgezogen und in diese zurückgesteckt werden. Das als Zigarettenanzünder ausgebildete Element 1 kann beispielsweise eine nicht dargestellte Heizspirale und die Führungshülse 2 eine ebenfalls nicht dargestellte Stromversorgung für die Heizspirale aufweisen.

### Bezugszeichenliste

- 1: Element
- 2: Führungshülse
- 3: Wandung
- 4: Aufnahme
- 5: Führungseinrichtung
- 6: Koppelmittel
- 7: Stellelement
- 8: Kulissenführung
- 9: Achse
- 10: Wippe
- 11: Achse
- 12: Hebel
- 13: Gelenk
- 14: Zwischenglied
- 15: Gelenk

## Patentansprüche

1. Bedieneinrichtung für ein Element (1) im Greifbereich eines Fahrers eines Kraftfahrzeuges mit einer Aufnahme (4) für das Element (1) und mit einer Führungseinrichtung (5) zur Führung des Elementes (1) von einer zurückgezogenen Position in eine hervorstehende, zur Bedienung des Elements (1) vorgesehene Position, wobei die Aufnahme (4) ein schwenkbar gelagertes Stellelement (7) hat, wobei zwischen dem Element (1) und dem Stellelement (7) Koppelmittel (6) zur Übertragung der Schwenkbewegung des Stellelementes (7) auf Längsbewegungen des Elementes (1) in der Führungseinrichtung (5) angeordnet sind und die Koppelmittel einen mit dem Stellelement verbundenen Hebel (12) aufweisen, **dadurch gekennzeichnet, dass** der Hebel (12) über ein gelenkig mit dem Hebel (12) verbundenes Zwischenglied (14) mit einer Wippe (10) gelenkig verbunden ist, wobei das Zwischenglied (14) in der hervorstehenden Position des Elements (1) eine Gerade bzw. annähernd eine Gerade mit dem Hebel (12) bildet.

2. Bedieneinrichtung nach Anspruch 1, **dadurch gekennzeichnet, dass** das Stellelement (7) als das Element (1) in der zurückgezogenen Position abdeckende Klappe ausgebildet ist.

3. Bedieneinrichtung nach zumindest einem der vorhergehenden Ansprüche, **dadurch gekennzeichnet, dass** die Koppelmittel (6) eine Kulissenführung (8) zwischen der Wippe (10) und dem Element (1) aufweisen.

4. Bedieneinrichtung nach zumindest einem der vorhergehenden Ansprüche, **dadurch gekennzeichnet, dass** das Element (1) mit einer in der Führungseinrichtung (5) verschieblichen Führungshülse (2) verbunden ist.

5. Bedieneinrichtung nach zumindest einem der vorhergehenden Ansprüche, **dadurch gekennzeichnet, dass** die Koppelmittel (6) vollständig unterhalb einer an die Aufnahme (4) angrenzenden Wandung (3) angeordnet sind.

6. Bedieneinrichtung nach zumindest einem der vorhergehenden Ansprüche, **dadurch gekennzeichnet, dass** das Element (1) ein Zigarettenanzünder ist, der in einer Armaturentafel im Greifbereich des Fahrers des Kraftfahrzeuges angeordnet ist.

## Claims

1. Control device for an element (1) in the catching range of a driver of a motor vehicle with a acceptance (4) for an element (1) and with a guiding device (5) to guide an element (1) from a rear position into an overhanging position designed to control the element (1), wherein the acceptance (4) has a pivoted adjustment mechanism (7), wherein between the element (1) and the adjustment mechanism (7) coupling means (6) are aligned for the transmission of the pivoting movement of the adjustment mechanism (7) to longitudinal movements of the element (1) in the guiding device (5), and wherein the coupling means are equipped with a lever (12) connected with the adjustment mechanism, **characterized in that** the lever (12) is pivoted and connected with a compensator (10) through a lever (12) movably connected with an connecting link (14), wherein the connecting link (14) in the overhanging position of the element (1) forms a straight or approximately a straight to the lever (12).

2. Control device according to claim 1, **characterized in that** the adjustments mechanism (7) is designed as a clap covering the element (1) in the rear position.

3. Control device according to at least one of the precedent claims, **characterized in that** the coupling means (6) are equipped with a guide bar (8) between the compensator (10) and the element (1).

4. Control device according to at least one of the precedent claims, **characterized in that** the element (1) is connected with a guide sleeve (2) movable inside the guiding device (5).

5. Control device according to at least one of the precedent claims, **characterized in that** the coupling means (6) are completely aligned under one of the walls (3) conterminous to the acceptance (4).

6. Control device according to at least one of the precedent claims, **characterized in that** the element (1) is a cigarette lighter which is aligned in an instrument panel in the catching range of the driver of the motor vehicle.

## Revendications

1. Dispositif d'utilisation pour un élément (1) en zone d'atteinte d'un chauffeur de véhicule avec un croquis (4) pour l'élément (1) et avec une installation principale (5) pour le guidage de l'élément (1) d'une position retirée dans une position en saillie prévue, pour l'utilisation de l'élément (1) où le croquis (4) a un élément de réglage pivotant stocké (7), où entre l'élément (1) et l'actuateur de correction (7) des barres de poussée (6) sont disposés pour la transmission du mouvement de traînée de l' actuateur de correction (7) sur des mouvements longitudinaux de l'élément (1) dans le dispositif de guidage (5) et les barres de poussée montrent un levier relié à l'actuateur de correction (12), **caractérisé en ce que** le levier (12) est relié par une articulation à une butée (14) avec une bascule (10) où la butée (14) forme une ligne droite ou approximativement une ligne droite avec le levier (12) en position de saillie de l'élément (1).

2. Dispositif d'utilisation selon revendication 1, **caractérisé en ce que** l'actuateur de correction (7) est présenté comme l'élément (1) dans la position retirée du clapet obstrué.

3. Dispositif d'utilisation selon au moins l'une des revendications précédentes, **caractérisé en ce que** les barres de poussée (6) présentent un guidage à coulisses (8) entre la bascule (10) et l'élément (1).

4. Dispositif d'utilisation selon au moins l'une des revendications précédentes, **caractérisé en ce que** l'élément (1) est relié à l'une des enveloppes principales déplaçables (2) dans le guidage (5).

5. Dispositif d'utilisation selon au moins l'une des revendications précédentes, **caractérisé en ce que** les barres de liaison (6) sont disposées complètement en dessous de l'une des parois avoisinantes (3) sur les croquis (4).

6. Dispositif d'utilisation selon au moins l'une des revendications précédentes, **caractérisé en ce que** l'élément (1) est un allumeur de cigarette qui est disposé dans un tableau de bord à portée du chauffeur du véhicule.
